# EUROPÄISCHE PATENTSCHRIFT

(11) **EP 0 262 636 B1**
(45) Veröffentlichungstag und Bekanntmachung des Hinweises auf die Patenterteilung: **18.05.1994**
(21) Anmeldenummer: 87114136.2
(22) Anmeldetag: 28.09.1987
(51) Int. Cl.: G06F 7/00, G06F 5/01, G06F 9/30

(54) **Schaltungsanordnung zum Auswählen und/oder Ausrichten von Dateneinheiten in Datenverarbeitungsanlagen**
Circuit arrangement for selecting and/or aligning data units in data processors
Circuit de sélection et/ou d'alignement d'unités de données aux dispositifs de traitement de données

(30) Priorität: 30.09.1986 DE 3633302
(43) Veröffentlichungstag der Anmeldung: 06.04.1988
(73) Patentinhaber: Siemens Nixdorf Informationssysteme Aktiengesellschaft, 33102 Paderborn (DE)
(72) Erfinder: Nussbächer, Hans, Klaus, Dipl.-Ing., D-8000 München 40 (DE)
(74) Vertreter: Fuchs, Franz-Josef, Dr.-Ing.

(56) Entgegenhaltungen:
- DE-A- 3 138 974
- IBM TECHNICAL DISCLOSURE BULLETIN, Band 27, Nr. 10B, März 1985, Zeilen 6084-6088, New York, US; "Selectable size cache array"
- PROCEEDINGS OF THE COMPUTER DESIGNERS CONFERENCE, Januar 1971, Zeilen 7-24, New York, US; K.J. THURBER: "Permutation switching networks"
- NEW ELECTRONICS, Band 17, Nr. 17, September 1984, Zeilen 69,70,73, Warley, West Midlands, GB; B.S. KITSON et al.: "PALS improve superminicomputer design"

## Beschreibung

Die Erfindung betrifft eine Schaltungsanordnung zum Auswählen und/oder Ausrichten einer vorgegebenen Anzahl von Dateneinheiten gemäß dem Oberbegriff des Patentanspruches 1.

In Datenverarbeitungsanlagen besteht häufig die Notwendigkeit, in einem Register bereitgestellte Dateneinheiten, die ein Bit oder meistens ein Byte mit je acht Bits umfassen, um eine vorgegebene Anzahl von Dateneinheiten nach rechts oder links zu verschieben oder an einer vorgegebenen Grenze, z.B. Doppelwortgrenze, auszurichten. Vielfach ist dabei die Anzahl der gleichzeitig bereitgestellten Dateneinheiten größer als die Anzahl der nacheinander an eine andere Einheit weiterzuleitenden Dateneinheiten, so daß ausgehend von einer die erste Dateneinheit festlegenden Adresse die benötigte Anzahl von Dateneinheiten mit fortlaufend steigender oder fallender Adresse entsprechend einer links- oder rechtsbündigen Ausrichtung ausgewählt werden muß.

Derartige Auswähl und/oder Ausrichtvorgänge sind insbesondere im Verkehr zwischen einem dem Arbeitsspeicher einer Datenverarbeitungsanlage vorgeschalteten Pufferspeicher und der Verarbeitungseinheit bei der Aufbereitung von Befehlen und Operanden erforderlich, wobei vielfach zusätzliche Steuervorgänge auszuführen sind, zum Beispiel bei Pufferspeichern mit mehreren Speicherbänken eine entsprechende Bankauswahl und bei kürzeren Operanden eine Unterdrückung nicht dazugehöriger Dateneinheiten - man siehe zum Beispiel DE-PS 31 38 974.

Diese verschiedenen Steuerfunktionen werden in der Regel in aufeinanderfolgenden, voneinander getrennten Steuerstufen ausgeführt, die aus Multiplexerbausteinen aufgebaut sind. Derartige Multiplexerbausteine stehen überwiegend mit zwei Gruppen von Informationseingängen und einem Auswahlsteuereingang oder mit vier Gruppen von Informationseingängen und zwei Steuerauswahleingängen zur Verfügung, so daß bei einer größeren Anzahl von Dateneinheiten allein für das gerichtete Auswählen einer Folge von Dateneinheiten mehrere Multiplexerbausteine nacheinander zu durchlaufen sind. Ein derartiger funktionsbezogener mehrstufiger Aufbau ist zwar sehr übersichtlich und durchschaubar, jedoch bedingt jede Multiplexerstufe einen Laufzeitverlust und in Verbindung mit Pufferspeichern eine Verlängerung des Pufferspeicher-Lesezyklus, durch den wiederum die Leistungsfähigkeit der Verarbeitungseinheiten wesentlich bestimmt wird.

Aufgabe der Erfindung ist es daher, die Schaltungsanordnung der eingangs genannten Art so auszubilden, daß trotz größtmöglicher Einsatzbreite und Anpassungsfähigkeit an die verschiedenen Betriebsfälle die durch das Auswählen und/oder Ausrichten von Dateneinheiten bedingten Laufzeiten auf ein Minimum reduziert sind.

Diese Aufgabe wird dem Prinzip nach durch die kennzeichnenden Merkmale des Patentanspruches 1 gelöst.

Die Erfindung geht dabei von der Tatsache aus, daß alle Steuerfunktionen in einem einzigen UND-Glied je Datenbit vereinigt und damit gleichzeitig ausgeführt werden können, wobei die Anzahl der Steuereingänge neben dem für das Datenbit auf die Anzahl der verschiedenen Steuerfunktionen beschränkt bleiben kann. Analoges gilt für die zu Gruppen zusammengefaßten und gleichbeschalteten UND-Glieder für die einzelnen Bits einer jeweils mehrere Bits umfassenden Dateneinheit.

Bildet man je Dateneinheit eine auf denselben Ausgang arbeitende Kombination mit einer der Anzahl der verfügbaren Dateneinheiten entsprechenden Anzahl von UND-Gliedern bzw. UND-Gliedergruppen, der man der Reihe nach eine der Dateneinheiten zuordnet, dann kann man durch ein individuelles Steuersignal je UND-Glied bzw. UND-Glied Gruppe wahlweise jede der zur Verfügung stehenden Dateneinheiten auf den einzigen Ausgang durchschalten. Sollen daher bei mehreren UND-Gliedkombinationen zusammenhängende Dateneinheiten auf allen Ausgängen parallel bereitgestellt werden, dann braucht bei unveränderter Steuersignalbeschaltung die Zuordnung der einzelnen Dateneinheiten je UND-Gliedkombination nur um eine Dateneinheit zyklisch versetzt getroffen zu werden. Die individuellen Steuersignale, die dann jeweils den einander entsprechenden UND-Gliedern bzw. UND-Gliedergruppen zugeführt werden, können in einfacher Weise aus den relevanten Adressenbits der die Lage der als Ausgangspunkt gewählten Dateneinheit kennzeichnenden Adresse durch entsprechende Binärdecodierung abgeleitet werden. Diese Steuersignale wirken dabei wie Schiebesteuersignale mit unterschiedlichen Verschiebeamplituden bezogen auf dieselbe Dateneinheit, wobei die Zählrichtung der Adressenzuordnung die Richtung bestimmt, was bei normalerweise aufsteigender Zählrichtung einer Linksverschiebung oder -ausrichtung entspricht.

Ausgehend von dieser Grundstruktur der Schaltungsanordnung mit lediglich zwei Gatterlaufzeiten lassen sich weitere Steuerungsfunktionen in einfacher Weise mit einbeziehen. Entsprechende Weiterbildungen ergeben sich aus den übrigen Patentansprüchen.

Einzelheiten der Erfindung seien nachfolgend anhand eines in der Zeichnung dargestellten Ausführungsbeispieles näher beschrieben. Im einzelnen zeigen
- FIG 1: ein schematisches Übersichtsschaltbild eines Pufferspeichers mit vier Speicherbänken und einer entsprechend der Erfindung aufgebauten Byteauswahlsteuerung mit zugehöriger Adressenmodifikationseinrichtung,
- FIG 2: ein schematisches Übersichtsschaltbild der Byteauswahlsteuerung von FIG 1,
- FIG 3: die Beschaltung der UND-Gliedergruppen der einzelnen UND-Gliedkombinationen innerhalb der Byteauswahlsteuerung,
- FIG 4: ein dazugehöriges Auswahlschiebediagramm,
- FIG 5: ein Blockschaltbild der Adressenmodifikationseinrichtung von FIG 1 und
- FIG 6: ein dazugehöriges Steuerdiagramm.

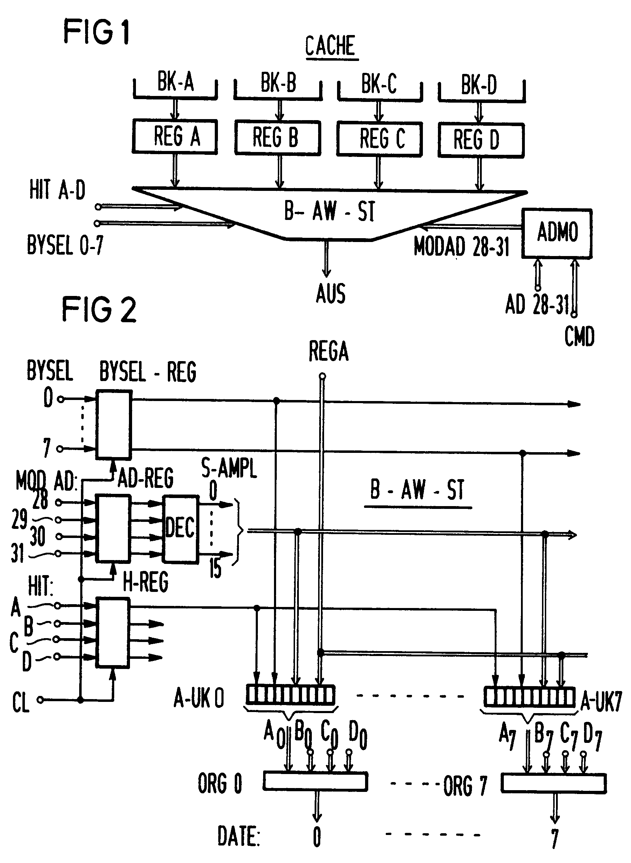

Das Übersichtsschaltbild von FIG 1 zeigt schematisch die vier Bänke BK-A bis BK-D eines Pufferspeichers CACHE mit den Leseregistern REG A bis REGD. Alle Leseregister sind mir ihren Ausgängen an eine Byteauswahlsteuerung B-AW-ST angeschlossen, die abhängig von den durch eine Adressenmodifikationseinrichtung ADMO gelieferten Steueradressen MODAD28-31 und den Steuersignalen HIT A-D für die Bankauswahl und BYSEL0-7 für die Byteauswahl bzw. -unterdrückung arbeitet. Dabei sei unterstellt, daß die Speicherbreite der einzelnen Speicherbänke und Leseregister 16 Byte entsprechend 16 Dateneinheiten beträgt, so daß am Eingang der Byteauswahlsteuerung B-AW-ST insgesamt 64 Byte parallel zur Verfügung stehen, während vom Ausgang AUS lediglich maximal acht Bytes abgegeben werden, die jeweils aus den 16 Bytes einer der ausgewählten Bänke ausgewählt werden. Auf die Funktion der Adressenmodifikationseinrichtung ADMO wird später eingegangen werden.

Entsprechend dem Übersichtsschaltbild der Byteauswahlsteuerung B-AW-ST gemäß FIG 2 werden die dieser zugeführten Signale BYSEL0-7, MODAD28-31 und HIT A-D mit einem der Takte CL jeweils in Register BYSEL-REG, AD-REG und HIT-REG übernommen, wobei dem Register AD-REG noch ein Decoder DEC zur Umsetzung der zugeführten Binäradresse MODAD28-31 in Schiebesteuersignale mit unterschiedlicher Schiebemaplitude S-AMPL0 bis S-AMPL15 nachgeschaltet ist. Damit stehen zur Steuerung der Byteauswahlsteuerung B-AW-ST insgesamt drei Gruppen von Einzelsteuersignalen auf individuellen Steuerleitungen zur Verfügung.

Weiterer Bestandteil der Byteauswahlsteuerung B-AW-ST sind je Bank eine Reihe von UND-Gliedkombinationen, von denen im vorliegenden Fall lediglich die der Bank BKA zugeordneten und vom Register REG A gespeisten acht UND-Gliedkombinationen A-UK0 bis A-UK7 entsprechend den acht maximal auszuwählenden Dateneinheiten DATE0 bis 7 schematisch dargestellt sind und ein für alle UND-Gliedkombinationen gemeinsamer Satz von ebenfalls acht ODER-Gliedgruppen ORG0 bis ORG7, über die die jeweils ausgewählten und ausgerichteten Dateneinheiten einem nicht gezeigten Register zugeführt werden.

Zur Vervollständigung der Byteauswahlsteuerung B-AW-ST ist also der in FIG 2 dargestellte Satz von UND-Gliederkombinationen A-UK0 bis A-UK7 mit seiner Beschaltung der Steuereingänge durch drei weitere solcher Sätze für die übrigen Bänke BK-B bis BK-D des Pufferspeichers CACHE zu ergänzen, was durch die entsprechenden zusätzlichen Eingänge B₀, C₀, D₀ bei der ODER-Gliedgruppe ORG0 und durch die zusätzlichen Eingänge B₇, C₇, D₇ bei der ODER-Gliedgruppe ORG7 angedeutet ist.

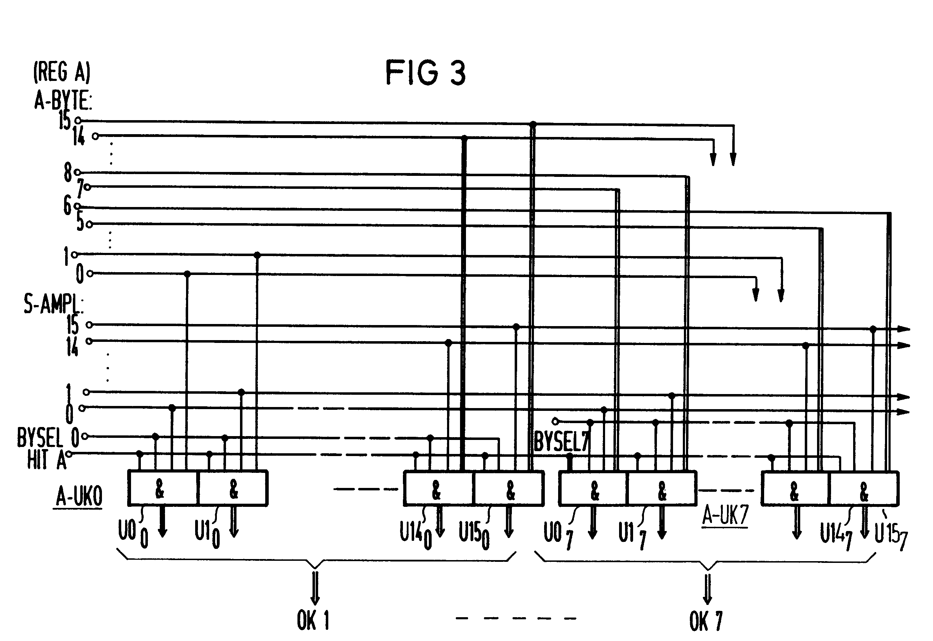

Genauere Hinweise für die Beschaltung der UND-Glieder der UND-Gliederkombinationen ergeben sich aus FIG 3 mit Bezug auf die UND-Gliederkombinationen A-UK0 bis A-UK7 von FIG 2. Jede dieser UND-Gliedkombinationen besteht aus einer der Anzahl der bereitgestellten Dateneinheiten A-BYTE0 bis 15 entsprechenden Anzahl von UND-Gliedergruppen, von denen die UND-Gliedergruppen U0₀ bis U15₀ für die an erster Stelle auszuwählende Dateneinheit DATE0 und die UND-Gliedergruppe U0₇ bis U15₇ für die an letzter Stelle auszuwählende Dateneinheit DATE7 gezeigt ist. Jede dieser UND-Gliedergruppen, z.B. U0₀, besteht aus einer der Anzahl von Bits je Dateneinheit entsprechenden Anzahl gleichartig beschalteter UND-Glieder, wobei lediglich der Eingang für das Datenbit jeweils mit einem anderen Bit der Dateneinheit beschaltet ist. Im vorliegenden Falle wurde der Übersichtlichkeit wegen auf eine entsprechende ausführliche Darstellung verzichtet und von jeder UND-Gliedergruppe nur ein UND-Glied gezeigt, was einer Dateneinheit mit nur einem Bit entspricht.

Jedes der UND-Glieder weist vier Eingänge und einen Datenbitausgang auf; einer der Eingänge ist mit einem Datenbit, ein zweiter mit dem Verschiebesteuersignal vorgegebener Schiebeamplitude S-AMPL..., ein dritter mit dem Byteauswahlsignal BYSEL... und ein vierter mit dem Bankauswahlsignal HIT... belegt.

Das Bankauswahlsignal, zum Beispiel HIT A, wirkt auf alle UND-Glieder bzw. UND-Gliedergruppen aller UND-Gliedkombinationen derselben Bank ein, also für die Bank BK-A auf die dargestellten UND-Gliedkombinationen A-UK0 bis A-UK7. Die Byteauswahlsignale BYSEL... steuern in jedem bankindividuellen Satz von UND-Gliedkombinationen jeweils nur die UND-Gliedergruppen einer UND-Gliedkombination an, im vorliegenden Falle also das Signal BYSEL0 die UND-Gliedkombination A-UK0 und das Signal BYSEL7 die UND-Gliedkombination A-UK7, so daß durch Ausbleiben eines oder mehrerer dieser Signale ausgewählte Bytes in einfacher Weise unterdrückt und damit zwangsläufig durch Nullen aufgefüllt werden.

Dagegen gestaltet sich die Beschaltung mit den jeweiligen Datenbitsignalen und den Verschiebesteuersignalen etwas komplizierter nach einem vorgegebenen Vertauschungsschema: In allen UND-Gliedkombinationen sind die einzelnen UND-Glieder bzw. UND-Gliedergruppen, z.B. U0₀ bis U15₀, der Reihe nach mit einem der Verschiebesteuersignale einer vorgegebenen Amplitude S-AMPL... beschaltet, zum Beispiel die jeweils erste UND-Gliedergruppe U0₀ bzw. U0₇ mit der Schiebeamplitude S-AMPL0, die jeweils zweite UND-Gliedergruppe U1₀ bzw. U1₇ mit der Schiebeamplitude S-AMPL1 fortlaufend bis zu den jeweils letzten UND-Gliedergruppen U15₀ bzw. U15₇ mit der Schiebeamplitude S-AMPL15. Will man daher mit einer vorgegebenen Schiebeamplitude, z.B. S-AMPL0, eine fortlaufende Reihe von acht Dateneinheiten auswählen, dann müssen die einander entsprechenden UND-Gliedergruppen, z.B. U0₀ bis U0₇, der einzelnen UND-Gliedkombination A-UK 0 bis A-UK 7 ausgehend von einer ersten Dateneinheit, zum Beispiel A-BYTE0, nacheinander mit den jeweils nachfolgenden Dateneinheiten A-BYTE1 bis A-BYTE7 an der letzten UND-Gliedkombination A-UK7 beschaltet sein. In gleicher Weise sind die nachfolgenden UND-Gliedergruppen jeweils in zyklischer Folge mit einer um eine Dateneinheit versetzt folgenden Dateneinheit zu belegen.

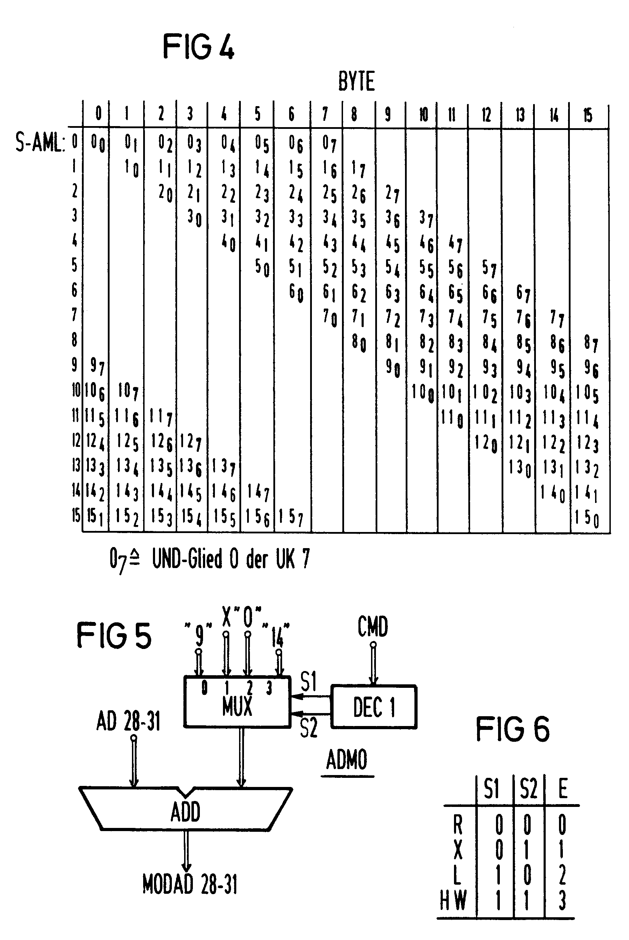

Das Auswahlschiebediagramm von FIG 4 verdeutlicht in tabellarischer Darstellung diesen Zusammenhang zwischen der jeweiligen Verschiebeamplitude S-AMPL0 bis 15 und der jeweiligen zur Verfügung gestellten Dateneinheit BYTE0 bis BYTE15, wobei die eingetragenen Werte, zum Beispiel 0₇, das UND-Glied bzw. die UND-Gliedergruppe, im vorliegenden Falle also 0, der UND-Gliedkombination, im vorliegenden Falle A-UK7, bezeichnen, an derem Ausgang die darüber angegebene Dateneinheit, zum Beispiel BYTE7, bei einer vorgegebenen Schiebeamplitude, zum Beispiel S-AMPL0, erscheint. Jede Schiebeamplitude S-AMPL.... hat die Auswahl von acht in Reihe folgenden Dateneinheiten in linksbündiger Ausrichtung zur Folge, bei der Schiebeamplitude S-AMPL0 die Dateneinheiten BYTE0 bis BYTE7 an den Ausgängen der jeweils ersten UND-Gliedergruppen U0₀ bis U0₇ in den acht UND-Gliedkombinationen A-UK0 bis A-UK7. Mit Erhöhung der Schiebeamplitude um jeweils eine Einheit wird dann jeweils eine um eine Dateneinheit nach rechts versetzte Dateneinheitsreihe ausgewählt, also bei der Schiebeamplitude S-AMPL1 die Dateneinheiten BYTE1 bis BYTE8 und so weiter, bis schließlich mit der Schiebeamplitude S-AMPL8 die letzten acht Dateneinheiten BYTE8 bis BYT 15 der zur Verfügung gestellten 16 Dateneinheiten erfaßt werden. Bei den nachfolgenden Schiebeamplituden S-AMPL9 bis 15 werden dann entsprechend der zyklischen Zählfolge die am Anfang der bereitgestellten Menge liegenden Dateneinheiten BYTE0 bis schließlich BYTE6 nacheinander erfaßt. Aus den acht von links oben nach rechts unten verlaufenden Diagonalen wird dabei gleichzeitig ersichtlich, daß die einzelnen Dateneinheiten jeweils nacheinander auf die einzelnen UND-Gliedergruppen einer UND-Gliedkombination verteilt sind, und zwar von UND-Gliedkombination zu UND-Gliedkombination um eine Dateneinheit versetzt. Weiterhin ist anhand der einzelnen Spalten, z.B. Spalte für die Dateneinheit BYTE7, erkennbar, daß jede Dateneinheit in jeder UND-Gliedkombination verfügbar ist, die den unterschiedlichen Indizes 0 bis 7 entsprechen, allerdings jeweils für eine andere UND-Gliedergruppe.

Unterstellt man entsprechend dem gewählten Beispiel, daß die Lage der einzelnen Dateneinheiten bei insgesamt 16 Dateneinheiten durch die letzten vier Bits, zum Beispiel AD28-31, einer Speicheradresse AD bestimmt ist und die Schiebeamplitude S-AMPL... jeweils gleich dem entsprechenden Dezimalwert ist, dann ergibt sich bei der vorgegebenen Beschaltung immer eine linksbündige Ausrichtung, d.h. ausgehend von der durch eine vorgegebene Adresse gekennzeichneten Dateneinheit, z.B. BYTE8, werden immer die rechts anschließenden Dateneinheiten erfaßt und ausgewählt. Neben der linksbündigen Ausrichtung muß aber auch eine rechtsbündige Ausrichtung möglich sein, um den gestellten Forderungen zu genügen. Dies läßt sich in einfacher Weise durch Modifikation der der zur Verfügung stehenden Adressenbits AD28-31 erreichen.

Wie aus dem Auswahldiagramm von FIG 4 ersichtlich, ergibt die Adresse für die Dateneinheit BYTE7 die Schiebeamplitude S-AMPL7 bei linksbündiger Ausrichtung. Soll dagegen die Ausrichtung von derselben Dateneinheit ausgehend rechtsbündig sein, dann müßte die Schiebeamplitude S-AMPL0 wirksam werden, d.h. eine rechtsbündige Ausrichtung läßt sich in einfacher Weise durch Erniedrigen der vorgegebenen Adresse um den Wert "7" bzw. durch Addition des Komplementärwertes "9" erreichen. Ebenso kann man, wie bei Halbwort-Operanden erforderlich, eine Versetzung um zwei Dateneinheiten nach rechts bei linksbündiger Ausrichtung durch Subtraktion des Wertes "2" bzw. Addition des Wertes "14" sicherstellen, ohne daß die Beschaltung innerhalb der Byteauswahlsteuerung B-AW-ST zu ändern ist.

FIG 5 zeigt eine entsprechend ausgebildete Adressenmodifikationseinrichtung ADMO. Diese besteht aus einem Addierer ADD, dessen einem Summandeneingang die relevanten Adressenbits AD28-31 zugeführt werden. Der andere Summandeneingang wird mit einem vom Befehl CMD abhängigen Konstantwert über einen Auswahlschalter MUX gespeist. Im vorliegenden Falle ist es der Konstantwert "9" am Eingang E0 für die rechtsbündige Ausrichtung R, der Konstantwert "0" am Eingang E2 für die linksbündige Ausrichtung L und der Konstantwert "14" am Eingang E3 für die linksbündige Halbwort-Operandenausrichtung HW, während der Eingang E1 des Auswahlschalters MUX ohne Bedeutung ist. Die Auswahl erfolgt abhängig von den Steuersignalen S1 und S2, die mittels der Decodiereinrichtung DEC1 aus dem jeweiligen Befehl CMD abgeleitet werden, wie es im zugehörigen Steuerdiagramm von FIG 6 angegeben ist.

Die Schaltungsanordnung gemäß der Erfindung ermöglicht nicht nur stark verkürzte Laufzeiten bei der Bereitstellung der auszuwählenden Dateneinheiten in beliebiger Ausrichtung ohne oder mit zusätzlicher Versetzung um eine oder mehrere Dateneinheiten, wobei wahlweise ausgewählte Dateneinheiten unterdrückt und durch Nullen aufgefüllt werden können, sowie die Funktion einer Bankauswahl einbezogen werden kann. Sie ist wegen ihres strukturellen Aufbaus besonders vorteilhaft auch für eine Realisierung durch höchstintegrierte Schaltkreise mit hohem Ausnutzungsgrad geeignet. Wegen der bitscheibenähnlichen Schaltungsstruktur mit einer Vielzahl gleichartiger Schaltungsteile ist es auch ohne weiteres möglich, die gesamte Schaltungsanordnung in gleichartige Teile zu unterteilen und diese Teile als integrierte Schaltkreise auszuführen, so daß durch die dadurch bedingten höheren Stückzahlen die Herstellungskosten gesenkt werden können.

Weiterhin ist es vorteilhaft, die benötigten ODER-Gliedgruppen ORG... nicht gesondert vorzusehen, sondern dafür die am Eingang von Registerbausteinen vorgesehenen Erweiterungsschaltungen zu nutzen, so daß die Laufzeiten durch die zusätzlichen ODER-Glieder ebenfalls entfallen.

## Patentansprüche

1. Schaltungsanordnung zum Auswählen und/oder Ausrichten einer vorgegebenen kleineren Anzahl von x Dateneinheiten zu je n Bit aus einer gleichzeitig bereitgestellten größeren Anzahl von y aufeinanderfolgenden Dateneinheiten zu je n Bit in Datenverarbeitungsanlagen, wobei ausgehend von der Adresse (AD) für eine der Dateneinheiten innerhalb der gleichzeitig bereitgestellten y Dateneinheiten die durch die Adresse (AD) bestimmte Dateneinheit bei linksbündiger Ausrichtung mit den jeweils rechts anschließenden oder bei rechtsbündiger Ausrichtung mit den jeweils links anschließenden Dateneinheiten ausgewählt werden, wobei durch eine befehlsbedingte Adressenmodifikation der Adresse (AD) eine gegenüber dieser Adresse versetzte Folge von Dateneinheiten ausgewählt werden kann und nicht benötigte Dateneinheiten der jeweiligen Folge von Dateneinheiten unterdrückt werden können,
**gekennzeichnet**
- durch x einstufige UND-Gliedkombinationen (A-UK0 bis A-UK7), die jeweils y UND-Gliedergruppen (U0₀ bis U15₀) enthalten, wobei jede UND-Gliedergruppe jeweils n UND-Gliederenthält, wobei den UND-Gliedern einer jeden UND-Gliedergruppe (U0₀ bis U 15₀) je eine der y gleichzeitig bereitgestellten Dateneinheiten zugeführt wird und die Reihenfolge der Dateneinheiten bei jeder UND-Gliedkombination (A-UK0 bis A-UK7) um eine Dateneinheit zyklisch versetzt beginnt,
- durch je eine ODER-Gliedgruppe (ORG0 bis ORG7) je UND-Gliedkombination (A-UK0 bis A-UK7) mit jeweils n ODER-Gliedern, wobei jedes ODER-Glied y Eingänge zur Zusammenfassung der von den korrespondierenden UND-Gliedern der y UND-Gliedergruppen jeweils gelieferten Ausgangssignale entsprechend der jeweils ausgewählten Dateneinheit aufweist, und
- durch Einrichtungen (DEC) zur Erzeugung einer der Anzahl der y gleichzeitig bereitgestellten Dateneinheiten entsprechenden Anzahl von y verschiedenen Schiebeamplituden (S-AMPL0-15) entsprechenden Schiebesteuersignalen abhängig von der die jeweils erste Dateneinheit einer auszuwählenden Folge kennzeichnenden Adresse (AD 28-31), wobei jedes Schiebesteuersignal entsprechend der Rangfolge seiner Schiebeamplitude (S-AMPL0-15) auf je eine UND-Gliedergruppe (U0₀ bis U15₀) innerhalb jeder UND-Gliedkombination (A-UK0) einwirkt, wobei die n UND-Glieder der jeweiligen UND-Gliedergruppe jeweils parallel angesteuert werden, so daß jeweils die einander korrespondierenden UND-Gliedergruppen (z.B. U0₀ bis U0₇) aller UND-Gliedkombinationen (A-UK0 bis A-UK7) die vorgegebene Anzahl von x aufeinanderfolgenden Dateneinheiten aus der gleichzeitig bereitgestellten Folge von y Dateneinheiten liefern.

2. Schaltungsanordnung nach Anspruch 1,
**dadurch gekennzeichnet,**
daß den Einrichtungen (DEC) zur Erzeugung der den adressenabhängigen, verschiedenen Schiebeamplituden (S-AMPL0-15) entsprechenden Schiebesteuersignale eine Adressenmodifikationseinrichtung (ADMO) vorgeschaltet ist, durch die die die jeweils erste Dateneinheit einer auszuwählenden Folge kennzeichnende Adresse (AD28-31) in eine die Art der Ausrichtung der auszuwählenden Folge von Dateneinheiten berücksichtigende modifizierte Adresse (MODAD28-31) abgewandelt wird, so daß ausgehend von derselben Adresse entsprechend den verschiedenen Möglichkeiten der Ausrichtung Schiebesteuersignale mit unterschiedlicher Schiebeamplitude auswählbar sind.

3. Schaltungsanordnung nach Anspruch 2,
**dadurch gekennzeichnet,**
daß die Adressenmodifikationseinrichtung (ADMO) aus einem Addierer (ADD) besteht, dessem einen Summandeneingang die die erste Dateneinheit kennzeichnende Adresse (AD28-31) zugeführt wird und dessem zweiten Summandeneingang ein Auswahlschalter (MUX) vorgeschaltet ist, dessen Eingänge mit, den einzelnen Ausrichtmöglichkeiten entsprechenden Konstantwerten ("0" bzw. "9" bzw. "14") beaufschlagt sind und der mit einem befehlsabhängigen Steuersignalgenerator (DEC1) zur Einstellung des Auswahlschalters (MUX) gekoppelt ist.

4. Schaltungsanordnung nach einem der Ansprüche 1 bis 3,
**dadurch gekennzeichnet,**
daß die n UND-Glieder einer jeden UND-Gliedergruppe (U0₀ bis U15₀) jeweils einen ersten zusätzlichen Steuereingang zum Wirksamschalten bzw. Sperren aufweisen und daß diese Steuereingänge aller UND-Glieder innerhalb einer jeden UND-Gliedkombination (A-UK0) mit einer gemeinsamen Steuerleitung (BYSELO) verbunden sind, so daß vorgegebene Dateneinheiten der jeweils ausgewählten Folge unterdrückbar sind.

5. Schaltungsanordnung für Speicher mit mehreren gleichzeitig lesbaren Speichersätzen oder Speicherbänken, wobei jede Speicherbank für sich eine größere Anzahl von y Dateneinheiten liefert, aus der dann eine Folge von x Dateneinheiten ausgewählt wird, nach einem der Ansprüche 1 bis 4,
**dadurch gekennzeichnet,**
daß je Speicherbank (BK-A bis BK-D) eine der vorgegebenen Anzahl von x auszuwählenden Dateneinheiten entsprechende Anzahl von x UND-Gliedkombinationen (A-UK0 bis A-UK7) vorgesehen ist, wobei die Ausgänge (A₀, B₀, C₀, D₀) der jeweils einander entsprechenden UND-Gliedkombinationen für die einzelnen Speicherbänke durch jeweils eine aus n ODER-Gliedern mit jeweils einem der Anzahl der Speicherbänke (BK-A bis BK-D) entsprechenden Vielfachen von Eingängen bestehende ODER-Gliedergruppe (z.B. ORG0) zusammengefaßt werden,
daß die UND-Glieder aller UND-Gliedergruppen (U0₀ bis U15₇) einen zweiten zusätzlichen Steuereingang zum Wirksamschalten bzw. Sperren aufweisen und daß diese Steuereingänge aller UND-Glieder je bankindividuellem Satz von UND-Gliedkombinationen (A-UK0 bis A-UK7) mit derselben bankindividuellen Steuerleitung (HITA) verbunden sind, so daß jeweils nur die größere Datenfolge aus einer Bank (BK-A) für die Auswahl wirksam schaltbar ist.

6. Schaltungsanordnung nach einem der Ansprüche 1 bis 5,
**dadurch gekennzeichnet,**
daß die ODER-Glieder der ODER-Gliedergruppen (ORG0) je Dateneinheit Bestandteil einer Erweiterungsschaltung am Eingang eines die Dateneinheit aufnehmenden Registers ist.

## Claims

1. Circuit arrangement for selecting and/or aligning a predetermined smaller number of x data units of n bits each from a simultaneously provided larger number of y successive data units of n bits each in data processing systems, in which, starting from the address (AD) for one of the data units within the simultaneously provided y data units, the data unit specified by the address (AD) is selected with the respective right-adjoining data units in the case of left-justified alignment, or with the respective left-adjoining data units in the case of right-justified alignment, in which as a result of a command-triggered address modification of the address (AD) a sequence of data units offset in relation to said address can be selected and data units of the respective sequence of data units that are not required can be suppressed, characterized
- by x single-stage AND gate combinations (A-UK0 to A-UK7) which contain in each case y AND gate groups (U0₀ to U15₀), in which each AND gate group contains n AND gates in each case, in which in each case one of the y simultaneously provided data units is supplied to the AND gates of each AND gate group (U0₀ to U15₀) and the order of the data units for each AND gate combination (A-UK0 to A-UK7) begins cyclically offset by one data unit,
- by in each case one OR gate group (ORG0 to ORG7) for each AND gate combination (A-UK0 to A-UK7) with n OR gates in each case, in which each OR gate has y inputs for combining the output signals supplied from the corresponding AND gates of the y AND gate groups in each case in accordance with the respective selected data unit, and
- by devices (DEC) for generating a number, corresponding to the number of y simultaneously provided data units, of y shift control signals corresponding to different shift amplitudes (S-AMPL0-15) depending on the address (AD 28-31) identifying the respective first data unit of a sequence to be selected, in which each shift control signal influences in each case one AND gate group (U0₀ to U15₀) within each AND gate combination (A-UK0) in accordance with the level of its shift amplitude (S-AMPL0-15), in which the n AND gates of the respective AND gate group are driven in parallel in each case, so that in each case the mutually corresponding AND gate groups (for example U0₀ to U0₇) of all AND gate combinations (A-UK0 to A-UK7) supply the predetermined number of x successive data units from the simultaneously provided sequence of y data units.

2. Circuit arrangement according to Claim 1, characterized in that connected upstream of the devices (DEC) for generating the shift control signals corresponding to the different address-dependent shift amplitudes (S-AMPL0-15) is an address modification device (ADMO) by means of which the address (AD28-31) identifying the respective first data unit of a sequence to be selected is changed into a modified address (MODAD28-31) taking the type of alignment of the sequence of data units to be selected into account, so that starting from the same address, shift control signals with different shift amplitudes can be selected in accordance with the different options of the alignment.

3. Circuit arrangement according to Claim 2, characterized in that the address modification device (ADMO) comprises an adder (ADD), to one summand input of which the address (AD28-31) identifying the first data unit is supplied and connected upstream of the second summand input of which is a selection switch (MUX), the inputs of which receive constant values ("0" or "9" or "14" respectively) corresponding to the individual alignment options, and which is coupled to a command-dependent control signal generator (DEC1) for setting the selection switch (MUX).

4. Circuit arrangement according to one of Claims 1 to 3, characterized in that the n AND gates of each AND gate group (U0₀ to U15₀) have a first additional control input for activating or blocking in each case, and in that said control inputs of all AND gates within each AND gate combination (A-UK0) are connected to a common control line (BYSEL0) so that predetermined data units of the respective selected sequence can be suppressed.

5. Circuit arrangement for memories having a plurality of simultaneously readable memory blocks or memory banks, in which each memory bank inherently supplies a relatively large number of y data units from which a sequence of x data units is then selected, according to one of Claims 1 to 4, characterized in that a number of x AND gate combinations (A-UK0 to A-UK7) corresponding to the predetermined number of x data units to be selected is provided for each memory bank (BK-A to BK-D), in which the outputs (A₀, B₀, C₀, D₀) of the respective mutually corresponding AND gate combinations for the individual memory banks are combined by in each case an OR gate group (for example ORG0) comprising n OR gates with in each case a multiplicity of inputs corresponding to the number of memory banks (BK-A to BK-D), in that the AND gates of all AND gate groups (U0₀ to U15₇) have a second additional control input for activating or blocking, and in that said control inputs of all AND gates for each bank-specific set of AND gate combinations (A-UK0 to A-UK7) are connected to the same bank-specific control line (HITA), so that only the longer data sequence from a bank (BK-A) can be activated for the selection in each case.

6. Circuit arrangement according to one of Claims 1 to 5, characterized in that the OR gates of the OR gate groups (ORG0) for each data unit are part of an expander circuit at the input of a register containing the data unit.

## Revendications

1. Montage pour sélectionner et/ou aligner un nombre plus petit prédéterminé de x unités de données comprenant chacune n bits, à partir d'un nombre plus grand, disponible simultanément, de y unités de données successives comportant chacune n bits, dans des installations de traitement de données, du type dans lequel, à partir de l'adresse (AD), pour une des unités de données, parmi les y unités de données disponibles simultanément, l'unité de données déterminée par l'adresse (AD) est sélectionnée avec les unités de données ultérieures côté droit, dans le cas d'un alignement justifié à gauche ou, avec les unités de données ultérieures côté gauche, dans le cas de l'alignement justifié à droite, et du type dans lequel, grâce à une modification de l'adresse (AD), sur instruction, une suite, décalée par rapport à cette adresse, d'unités de données peut être sélectionnée et des unités de données, qui ne sont pas nécessaires, de la suite d'unités de données peuvent être supprimées,
caractérisé
- par x combinaisons de circuits ET à un étage (A-UK0 à A-UK7), qui comportent respectivement y groupes de circuits ET (U0₀ à U15₀), chaque groupe de circuits ET comportant respectivement n circuits ET, chacune des y unités de données disponibles simultanément étant envoyée aux circuits ET de chaque groupe de circuits ET (UO₀ à U15₀), et la séquence des unités de données commencant d'une manière décalée cycliquement d'une unité de données, pour chaque combinaison de circuits ET (A-UK0 à A-UK7),
- par un groupe de circuit OU (ORG0 à ORG7) pour chaque combinaison de circuits ET (A-UK0 à A-UK7) et comportant respectivement n circuits OU, chaque circuit OU comportant y entrées pour réunir les signaux de sortie fournis par les circuits ET correspondants des y groupes de circuits ET, en fonction de l'unité de données sélectionnée, et
- par des dispositifs (DEC) d'élaboration d'un nombre, qui correspond au nombre des y unités de données disponibles simultanément, de signaux de commande de décalage, qui correspondent à y amplitudes de décalage différentes (S-AMPL0-15), en fonction de l'adresse (AD 28-31) qui caractérise la première unité de données d'une suite à sélectionner, chaque signal de commande de décalage agissant, en fonction du rang de son amplitude de décalage (S-AMPLO-15) sur un groupe de circuits ET (U0₀ à U15₀) à l'intérieur de chaque combinaison de circuit (A-UK0), les n circuits ET du groupe de circuits ET étant commandés parallèlement, de sorte que les groupes de circuits ET (par exemple U0₀ à U0₇), qui se correspondent, de toutes les combinaisons de circuits ET (A-UK0 à A-UK7) fournissent le nombre prédéterminé de x unités de données successives à partir de la suite, disponible simultanément, de y unités de données.

2. Montage suivant la revendication 1,
caractérisé par le fait qu'en amont des dispositifs (DEC) d'élaboration des signaux de commande de décalage, qui dépendent des adresses et qui correspondent à différentes amplitudes de décalage (S-AMPL0-15), est branché un dispositif (ADMO) de modification d'adresses, grâce auquel l'adresse (AD28-31), qui caractérise la première unité de données d'une suite à sélectionner, est convertie en une adresse modifiée (MODAD28-31), qui tient compte du type d'alignement de la suite à sélectionner d'unités de données, de sorte que des signaux de commande de décalage présentant une amplitude de décalage différente peuvent être sélectionnés à partir de la même adresse en fonction des différentes possibilités de l'alignement.

3. Montage suivant la revendication 2,
caractérisé par le fait que le dispositif (ADMO) de modification d'adresses est constitué d'un additionneur (ADD), à une entrée des termes de somme duquel est envoyée l'adresse (AD28-31), qui caractérise la première unité de données, et en amont de la seconde entrée des termes de somme duquel est branché un commutateur de sélection (MUX), dont les entrées sont chargées par des valeurs constantes ("0" ou "9" ou "14") correspondant à diverses possibilités d'alignement, et qui est couplé à un générateur de signaux de commande (DEC1), dont le fonctionnement dépend d'une instruction et qui est destiné au commutateur de sélection (MUX).

4. Montage suivant l'une des revendications 1 à 3,
caractérisé par le fait que les n circuits ET de chaque groupe de circuits (U0₀ à U15₀) comportent respectivement une première entrée supplémentaire de commande pour l'activation ou pour le blocage, et que ces entrées de commande de tous les circuits ET sont reliées, à l'intérieur de chaque combinaison de circuits ET (A-UK0), à une ligne commune de commande (BYSEL0), de sorte que les unités de données prédéterminées peuvent être supprimées de la suite respectivement sélectionnée.

5. Montage pour mémoire comportant plusieurs ensembles ou blocs de mémoire à lire simultanément, chaque bloc de mémoire fournissant en soi un nombre plus grand de y unités de données, à partir desquelles est sélectionnée ensuite une suite de x unités de données, suivant l'une des revendications 1 à 4, caractérisé par le fait que pour chaque bloc de mémoire (BK-A à BK-D), il est prévu un nombre, qui correspond au nombre prédéterminé de x unités de données à sélectionner, de x combinaisons de circuits ET (A-UK0 à A-UK7), les sorties (A₀, B₀, C₀, D₀) des combinaisons de circuits ET, qui se correspondent, pour les différents blocs de mémoire, étant réunies au moyen d'un groupe de circuits OU (par exemple ORG0), qui est constitué de n circuits OU comportant chacun un nombre multiple d'entrées correspondant au nombre des blocs de mémoire (BK-A à BK-D), que les circuits ET de tous les groupes de circuits ET (U0₀ à U15₇) comportent une seconde entrée de commande supplémentaire pour l'activation ou pour le blocage, et que ces entrées de commande de tous les circuits ET sont reliées, pour chaque ensemble, prévu pour chaque bloc, de combinaisons de circuits ET (A-UK0 à A-UK7), à la même ligne de commande (HITA), prévue pour chaque bloc, de sorte que respectivement seule la suite la plus grande de données d'un bloc (BK-A) peut être activée pour la sélection.

6. Montage suivant l'une des revendications 1 à 5,
caractérisé par le fait que les circuits OU des groupes de circuits OU (ORG0) font partie, pour chaque unité de données, d'un circuit d'extension situé à l'entrée d'un registre recevant l'unité de données.
